# FASCICULE DE BREVET EUROPEEN

(11) **EP 0 599 713 B1**
(45) Date de publication et mention de la délivrance du brevet: **17.04.1996**
(21) Numéro de dépôt: 93402820.0
(22) Date de dépôt: 19.11.1993
(51) Int. Cl.: F24H 8/00

(54) **Chaudière à condensation à échangeur massique et thermique**
Brennwerk-Kessel mit Masse- und Wärmetauscher
Condensing boiler with a mass and heat exchanger

(30) Priorité: 20.11.1992 FR 9213985
(43) Date de publication de la demande: 01.06.1994
(73) Titulaire: SOCIETE D'ETUDE ET DE CONSTRUCTION DE CHAUDIERES EN ACIER SECCACIER, F-75015 Paris (FR)
(72) Inventeur: Billy, Daniel, F-75014 Paris (FR); Brunel, Gérald, F-75015 Paris (FR)
(74) Mandataire: Cabinet Pierre HERRBURGER

(56) Documents cités:
- REVUE GENERAL DE THERMIQUE vol. 30, no. 358, 30 Octobre 1991, PARIS pages 599 - 607 XP236596 GUILLET 'Pompes à vapeur d'eau et machines thermiques utilisant le gaz naturel'

## Description

La présente invention concerne une chaudière à condensation équipée d'un échangeur massique et thermique, comportant un brûleur alimenté en air humide ayant traversé l'échangeur massique et thermique par ailleurs traversé par les fumées en sortie de chaudière.

Les chaudières à condensation à échangeur massique et thermique présentent une efficacité meilleure que celles à condensation simple à la fois parce qu'elles récupèrent de l'énergie thermique par échange de chaleur et d'eau mais en outre l'air comburant humide favorise la combustion au niveau de la flamme. voir Revue Général de Thermique, vol. 40, no.358, pages 599-607.

Les échangeurs thermiques et massiques sont de deux types, ceux à laveurs et ceux à parois poreuses.

Les échangeurs à laveurs se composent d'un circuit de liquide lavant les fumées en sortie de chaudière en récupérant en même temps les condensations pour transférer cette chaleur et une partie des condensats à l'air comburant avant son entrée dans le foyer, en procédant par lavage de l'air comburant.

Le lavage se fait en général dans des enceintes de ruissellement.

L'autre type d'échange massique et thermique se compose d'une boîte subdivisée en deux compartiments par une cloison poreuse. Les fumées chaudes et humides traversent l'un des compartiments et l'air comburant froid et sec traverse l'autre compartiment .

La vapeur des fumées se condense sur la paroi poreuse et l'imprègne tout en la rendant alors étanche aux gaz.

Le condensat est repris sous forme de vapeur par l'air comburant qui se réchauffe et s'humidifie. Ainsi, une partie des condensats est échangée à travers la paroi et le reste ruisselle le long de la paroi pour être évacué.

Dans le cas d'une chaudière à échangeur massique et thermique, notamment si elle comporte un échangeur poreux selon le brevet FR 87 00 359, dans certaines situations de fonctionnement, la température et l'humidité de l'air peuvent dépasser les conditions acceptables pour les brûleurs actuels. Or, avec de tels brûleurs, on ne peut dépasser pour l'air comburant des températures de 60° avec 100 % d'humidité.

Il arrive également que l'air comburant soit trop humide et que la combustion se fait alors dans de mauvaises conditions et que la flamme s'éteigne.

La présente invention a pour but de remédier à ces inconvénients et se propose de créer une chaudière à échangeur massique et thermique, permettant d'améliorer le rendement de la combustion par une flamme plus efficace.

A cet effet, l'invention concerne une chaudière caractérisée en ce que le brûleur comprend une partie principale et une partie auxiliaire
- la partie principale est alimentée en air comburant sortant de l'échangeur massique et thermique
- la partie auxiliaire est alimentée en air ambiant, sec, n'ayant pas traversé l'échangeur massique et thermique
- la puissance de la partie auxiliaire ne représentant qu'une fraction marginale de la puissance totale du brûleur.

Le brûleur selon l'invention assure une excellente stabilité à la flamme quelles que soient les caractéristiques de l'air comburant, même si celui-ci est trop humide, par exemple en cas d'excellents échanges de l'échangeur massique et thermique atteignant des hautes températures d'air saturé.

Suivant une autre caractéristique, la chaudière comporte un ventilateur extracteur de fumées mettant le foyer en dépression en combinaison le cas échéant avec un volet pour faire évoluer simultanément le débit d'air comburant alimentant les deux brûleurs, de façon semblable, suivant la modulation de puissance demandée par la chaudière.

La chaudière peut également comporter un moyen de contrôle mesurant la pression ou le débit d'air sec à l'entrée de l'échangeur massique et thermique pour commander l'alimentation en gaz du brûleur principal et maintenir le rapport air/gaz de ce brûleur à un niveau prédéterminé ou un moyen de contrôle qui mesure la pression ou le débit d'air dans sa conduite d'amenée d'air. De même, le brûleur auxiliaire peut comporter un moyen de contrôle du débit (ou pression de gaz) en fonction du débit ou pression d'air sec à son aspiration, par exemple un système de détendeur à zéro.

De façon avantageuse, le brûleur principal et le brûleur auxiliaire sont coaxiaux et le brûleur principal entoure le brûleur auxiliaire.

De manière intéressante, le brûleur auxiliaire est équipé d'un volet d'air à son entrée d'aspiration. Ce volet peut être commandé manuellement ou par un moteur.

Enfin, la chaudière peut comporter un moyen de détection de flammes qui détecte la qualité de la flamme du brûleur pour commander le rapport entre les deux brûleurs en agissant sur le volet d'air du brûleur auxiliaire.

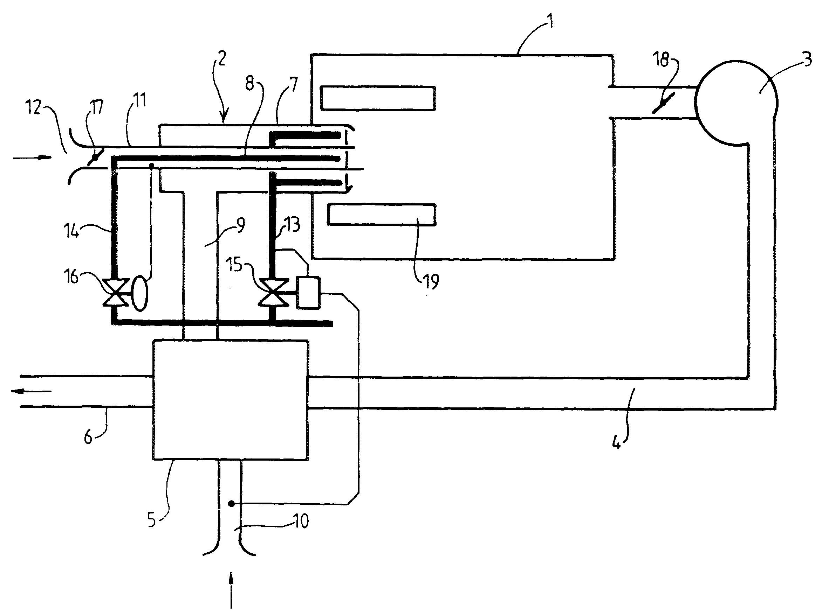

La présente invention sera décrite ci-après de manière plus détaillée à l'aide d'un exemple de réalisation d'une chaudière selon l'invention représentée dans l'unique figure annexée.

Selon la figure, l'invention concerne une chaudière à échangeur massique et thermique. Cette chaudière comprend un foyer 1 équipé d'un brûleur 2. Le foyer est mis en dépression par un ventilateur extracteur 3 qui dirige les fumées par une conduite 4 vers l'échangeur massique et thermique 5. Les fumées sortent de l'échangeur 5 par le tuyau 6.

Le brûleur 2 se compose d'une partie principale 7 et d'une partie auxiliaire 8. La partie principale 7 est alimentée en air comburant par le tuyau 9 relié en sortie d'échangeur massique et thermique 5, pour le flux qui correspond à l'entrée d'air extérieure 10. La partie auxiliaire 8 est alimentée en air comburant par le tuyau 11 qui reçoit sur son entrée 12, directement l'air ambiant, sec, n'ayant pas traversé d'échangeur massique et thermique 5.

L'alimentation en gaz de la partie principale 7 se fait par la conduite 13 et celle de la partie auxiliaire par la conduite 14. Chacune des conduites 13, 14 est équipée d'une électrovanne 15, 16 ; l'électrovanne 15 est commandée en fonction de la pression régnant dans le tuyau 10 d'alimentation en air qui comporte un organe déprimogène en fonction du débit de l'échangeur massique et thermique 5 et l'électrovanne 16 est commandée à partir de la pression régnant dans la conduite 11 (détendeur à zéro).

Le tuyau 11 est également équipé d'un volet de réglage 17 et la sortie de la chaudière est équipée d'un volet de réglage 18 motorisé et régulé à partir d'une mesure de la qualité de la flamme par exemple courant de ionisation. Enfin, dans le présent exemple, le brûleur 2 est entouré d'un anneau réfractaire 19, à la base de la flamme, pour stabiliser la flamme.

Selon l'exemple de réalisation représenté, le brûleur 2 comporte, de manière coaxiale, la partie principale et la partie auxiliaire ; la partie auxiliaire située dans l'axe est entourée de la partie principale.

## Revendications

1. Chaudière à condensation, à échangeur massique et thermique, comportant un brûleur (2) alimenté en air humide ayant traversé l'échangeur massique et thermique (5) par ailleurs traversé par les fumées en sortie de chaudière, chaudière caractérisée en ce que le brûleur (2) comprend une partie principale (7) et une partie auxiliaire (8)
- la partie principale (7) est alimentée en air comburant sortant de l'échangeur massique et thermique (5)
- la partie auxiliaire (8) est alimentée en air ambiant, sec, n'ayant pas traversé l'échangeur massique et thermique (5)
- la puissance de la partie auxiliaire (8) ne représentant qu'une fraction marginale de la puissance totale du brûleur (2).

2. Chaudière selon la revendication 1, caractérisée en ce que le brûleur (2) comporte un manchon réfractaire (19) situé à la base de la flamme.

3. Chaudière selon la revendication 1, caractérisée en ce qu'elle comporte un ventilateur (3) extracteur de fumées mettant le foyer (1) en dépression en combinaison le cas échéant avec un volet (18) pour faire évoluer simultanément le débit d'air comburant alimentant les deux parties de brûleur (7, 8), de façon semblable, suivant la modulation de puissance demandée par la chaudière.

4. Chaudière selon la revendication 1, caractérisée en ce qu'elle comporte un moyen de contrôle mesurant la pression ou le débit d'air sec à l'entrée de l'échangeur massique et thermique (5) pour commander l'alimentation en gaz de la partie principale (7) et maintenir le rapport air/gaz de cette partie (7) de brûleur à un niveau prédéterminé.

5. Chaudière selon la revendication 1, caractérisée en ce qu'elle comporte un moyen de contrôle qui mesure la pression ou le débit d'air dans sa conduite d'amenée d'air.

6. Chaudière selon la revendication 1, caractérisée en ce que la partie principale (7) et la partie auxiliaire (8) sont coaxiales et la partie principale (7) entoure la partie auxiliaire (8).

7. Chaudière selon la revendication 1, caractérisée en ce que la partie auxiliaire (8) est équipée d'un volet d'air (17) à son entrée d'aspiration (12).

8. Chaudière selon l'une quelconque des revendications 1 à 7, caractérisée en ce qu'elle comporte un moyen de détection de flammes qui détecte la qualité de la flamme du brûleur (7, 8) pour commander le rapport entre les deux parties du brûleur.

9. Chaudière selon l'une quelconque des revendications 1 à 8, caractérisée en ce que la partie auxiliaire (8) comporte un détendeur à zéro pour distribuer le gaz à une pression correspondant à celle d'air dans la conduite (11).

## Patentansprüche

1. Brennwertkessel mit Masse- und Wärmetauscher, bestehend aus einem Brenner (2), der mit feuchter Luft gespeist wird, die den Masse- und Wärmetauscher (5) durchquert hat, der im übrigen von den Ausgangsrauchgasen des Kessels durchquert wird, dadurch gekennzeichnet, daß der Brenner (2) einen Hauptteil (7) und einen Hilfsteil (8) umfaßt,
- der Hauptteil (7) mit aus dem Masse- und Wärmetauscher (5) austretender Luft gespeist wird,
- der Hilfsteil (8) mit trockener Umgebungsluft gespeist wird, die den Masse- und Wärmetauscher (5) nicht durchquert hat, und
- die Leistung des Hilfsteils (8) nur einen nebengeordneten Bruchteil der Gesamtleistung des Brenners (2) darstellt.

2. Kessel nach Anspruch 1, dadurch gekennzeichnet, daß der Brenner (2) eine an der Basis der Flamme gelegene feuerfeste Muffe umfaßt.

3. Kessel nach Anspruch 1, dadurch gekennzeichnet, daß er ein den Brennraum (1) unter Unterdruck setzendes Rauchgassauggebläse (3) umfaßt, ggf. in Kombination mit einer Klappe (18), um gleichzeitig die die beiden Brennerteile (7,8) speisende Verbrennungsluftmenge in gleicher Weise gemäß der Modulation der vom Kessel geforderten Leistung sich ändern zu lassen.

4. Kessel nach Anspruch 1, dadurch gekennzeichnet, daß er eine den Druck oder die Menge trockener Luft am Eingang des Masse- und Wärmetauschers (5) messende Regeleinrichtung umfaßt, um die Gasversorgung des Hauptteils (7) zu regeln und das Verhältnis Luft/Gas dieses Teils (7) des Brenners auf einem vorbestimmten Niveau zu halten.

5. Kessel nach Anspruch 1, dadurch gekennzeichnet, daß er eine Regeleinrichtung umfaßt, die den Druck oder die Menge der Luft in seiner Luftzufuhrleitung mißt.

6. Kessel nach Anspruch 1, dadurch gekennzeichnet, daß der Hauptteil (7) und der Hilfsteil (8) koaxial sind und der Hauptteil (7) den Hilfsteil (8) umgibt.

7. Kessel nach Anspruch 1, dadurch gekennzeichnet, daß der Hilfsteil (8) an seinem Ansaugeinlaß mit einer Luftklappe (17) versehen ist.

8. Kessel nach einem der Ansprüche 1 bis 7, dadurch gekennzeichnet, daß er eine Flammendetektoreinrichtung umfaßt, die die Beschaffenheit der Flamme des Brenners (7,8) ermittelt, um das Verhältnis zwischen den beiden Teilen des Brenners zu regeln.

9. Kessel nach einem der Ansprüche 1 bis 8, dadurch gekennzeichnet, daß der Hilfsteil (8) einen Druckminderer auf Null zum Verteilen des Gases mit einem Druck entsprechend dem der Luft in der Leitung (11) umfaßt.

## Claims

1. A condensation boiler with mass and heat exchanger, comprising a burner (2) supplied with moist air having passed through the mass and heat exchanger (5) through which also pass the boiler exhaust gases, the boiler being characterised in that the burner (2) comprises a main part (7) and an auxiliary part (8)
- the main part (7) is fed with combustion-supporting air issuing from the mass and heat exchanger (5),
- the auxiliary part (8) is fed with dry ambient air which has not passed through the mass and heat exchanger (5),
- the power of the auxiliary part (8) representing only a marginal fraction of the total of the burner (2).

2. A boiler according to claim 1 characterised in that the burner (2) comprises a refractory sleeve (19) disposed at the base of the flame.

3. A boiler according to claim 1 characterised in that it comprises a fume-extracting fan (3) for producing a depression in the firing chamber (1) in combination if necessary with a shutter (18) for simultaneously varying the flow of combustion-supporting air feeding the two burner parts (7, 8) in similar fashion depending on the modulation of power demanded by the boiler.

4. A boiler according to claim 1 characterised in that it comprises a monitoring means for measuring the pressure or flow rate of dry air at the intake of the mass and heat exchanger (5) for controlling the feed of gas to the main part (7) and for maintaining the air/gas ratio of said burner part (7) at a predetermined level.

5. A boiler according to claim 1 characterised in that it comprises a monitoring means which measures the pressure or the flow rate of air in its air supply conduit.

6. A boiler according to claim 1 characterised in that the main part (7) and the auxiliary part (8) are coaxial and the main part (7) surrounds the auxiliary part (8).

7. A boiler according to claim 1 characterised in that the auxiliary part (8) is fitted with an air shutter (17) at its suction intake (12).

8. A boiler according to any one of claims 1 to 7 characterised in that it comprises a flame detection means which detects the quality of the flame of the burner (7, 8) for controlling the ratio between the two parts of the burner.

9. A boiler according to any one of claims 1 to 8 characterised in that the auxiliary part (8) comprises a zero pressure reducing means for distributing the gas at a pressure corresponding to that of air in the conduit (11).
